(19) Europäisches Patentamt / European Patent Office / Office européen des brevets

(11) **EP 4 495 825 B1**

(12) **EUROPEAN PATENT SPECIFICATION**

(45) Date of publication and mention
of the grant of the patent:
**22.04.2026 Bulletin 2026/17**

(21) Application number: **24188640.7**

(22) Date of filing: **15.07.2024**

(51) International Patent Classification (IPC):
*G06K 7/10* (2006.01)     *G06K 7/00* (2006.01)

(52) Cooperative Patent Classification (CPC):
**G06K 7/10297; G06K 7/0008**

(54) **CLASSIFYING RFID TAG READS TO INCREASE CONFIDENCE OF TAG INVENTORY**

KLASSIFIZIERUNG VON RFID-ETIKETT-AUSLESUNGEN ZUR ERHÖHUNG DER KONFIDENZ
EINES ETIKETTENINVENTARS

CLASSIFICATION DE LECTURES D'ÉTIQUETTE RFID POUR AUGMENTER LA CONFIANCE
D'INVENTAIRE D'ÉTIQUETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.07.2023 US 202363527756 P**

(43) Date of publication of application:
**22.01.2025 Bulletin 2025/04**

(60) Divisional application:
**26165280.4**

(73) Proprietor: **UNITED PARCEL SERVICE OF
AMERICA, INC.
Atlanta, GA 30328 (US)**

(72) Inventor: **RYG, James
Atlanta, GA (US)**

(74) Representative: **Zacco Sweden AB
P.O. Box 5581
Löjtnantsgatan 21
114 85 Stockholm (SE)**

(56) References cited:
**US-A1- 2017 004 334     US-A1- 2022 239 335
US-A1- 2022 358 298**

## Description

### TECHNICAL FIELD

The present disclosure is generally related to systems, and corresponding methods, which provide improved evaluation of read data collected from radio frequency identification tags.

### BACKGROUND

Item tracking and identification has advanced with the development of machine-readable devices such as radio frequency identification ("RFID") transponders (a/k/a "tags"). For example, in manufacturing, warehousing and/or shipping environments, items may be associated with RFID tags to track them as well as to provide information about the items such as model or serial number, location, cost, shipper, recipient, recipient's address, and/or the like. In many instances, items that are associated with RFID tags are interrogated by an RFID reader numerous times as the items makes their way through manufacturing, warehousing, and/or shipping processes so that their locations can be tracked and known. However, many technical challenges still exist with using RFID technology to accurately track items through manufacturing, warehousing, and/or shipping processes. For example, many technical challenges can occur with using RFID technology in environments with wide-scale, relatively close to RFID tag read zones with close or overlapping coverage, and/or or environments with transition points where some variation in RFID tag read rate/strength occurs, or in a lower cost multiantenna configuration in very close quarters.

Therefore, a need exists in the art for systems, and corresponding methods, for improving on using RFID technology in determining, with an acceptable level of confidence, that a particular item is in a given location. Accordingly, various embodiments of the disclosure provided herein address such needs.

US 2022/358298 A1 describes a wireless tag reading device, a wireless tag reading method, and a program recording medium.

US 2017/004334 A1 describes a method and system for correctly identifying specific RFID tags.

US 2022/239335 A1 describes an NFC device postion finder.

### SUMMARY

The invention is defined by the independent claims. The dependent claims are directed to preferred embodiments.

### BRIEF DESCRIPTION OF THE DRAWINGS

In the course of this description, reference will be made to the accompanying drawings, which are not necessarily drawn to scale, and wherein:

FIG. 1 depicts an example configuration of an RF system in which various embodiments of the present disclosure may be practiced;
FIG. 2 depicts an example of a process for evaluating return RF signals from one or more RFID tags in accordance with various embodiments of the present disclosure;
FIGS. 3A, 3B, and 3C provide examples of graphical representations of linearized power data generated in accordance with various embodiments of the present disclosure;
FIG. 4 depicts an example of a process for linearizing one or more power values found in read data received from one or more RFID tags in accordance with various embodiments of the present disclosure;
FIG. 5 depicts an example of a process for conducting an evaluation of linearized values for one or more RFID tags with respect to one or more predicates in accordance with various embodiments of the present disclosure;
FIG. 6 depicts an example of a system architecture that may be used in accordance with various embodiments of the present disclosure; and
FIG. 7 depicts an example of computing hardware that may be used in accordance with various embodiments of the present disclosure.

### DETAILED DESCRIPTION

#### Overview

Item tracking and identification has advanced with the development of machine-readable devices such as radio frequency identification ("RFID") transponders. For example, in manufacturing, warehousing and/or shipping environments, items may be associated with RFID transponders to track them as well as to provide information about the items such as model or serial number, location, cost, shipper, recipient, recipient's address, and/or the like. In many instances, items that are tagged (i.e., associated) with RFID transponders will have their RFID transponders interrogated numerous times as the items make their way through manufacturing, warehousing, and/or shipping processes.

RFID transponders (a/k/a "tags") can be either active or passive with respect to the tag's power source and how the tag sends information to readers. An RFID reader or interrogator retrieves information stored on a tag through a return radio frequency ("RF") signal picked up by the reader's antenna. Normally, an RFID reader can read multiple tags within its (e.g., antenna's) read field. However, a technical challenge faced when using either a fixed or mobile reader is orienting the reader and/or the RFID tag such that the RFID tag can be read when it is within the reader's read field. This is especially true if an item associated with the tag involves content and/or is used in an environment that can be highly reflective such as a liquid or a metallic material as these materials may attenuate the RF signal transmitted by the reader and/or the return RF signal transmitted by the RFID tag.

A solution that is often used in addressing this technical challenge is to increase the transmission power to compensate for the RF signal being attenuated. However, this solution can lead to further technical challenges in that an RF system can function in a "leaky" manner because at a high-power level, the RF signal can bleed beyond an intended read field. This can prove even more of a technical challenge in systems involving one or more readers using multiple antennas in that a high transmission power can lead to antennas talking over each other and reading RFID tags located in neighboring read fields. This can make it difficult for the RF system to generate a determination, with an acceptable level of confidence, that a particular item is in a given read field.

Accordingly, various embodiments of the disclosure overcome the technical challenges described above and others described herein. Specifically, various embodiments of the disclosure involve an RF system that generates linearized power data representing read data received from one or more RFID tags, and taking action based on the linearized power data. The reader may interrogate an RFID tag by having the antenna transmit an RF signal at a certain power level (e.g., value) over a read field in which the RFID tag is located. The RFID tag may receive the RF signal and in turn, respond by sending a return RF signal that contains read data. Here, the read data may include data that is stored in memory of the RFID tag, as well as other data. For example, the read data may include an indication (e.g., identifier) that the RFID tag has responded/has been read, a received signal strength indicator ("RSSI") value that represent a measurement of the power of the return RF signal received from the RFID tag when interrogated by the reader, a phase angle identifying how far off is the frequency band of the return RF signal, and/or the like.

The read data collected by the reader over a given period of time (e.g., one second, two seconds, four seconds, etc.) may represent several reads of the RFID tag by the reader. For example, the read data collected by the reader over one second of time may include roughly twenty or more reads of the RFID tag, along with multiple reads of other RFID tags located in the read field. Therefore, the read data may include several indications that the RFID tag has responded/has been read that can be used in observing a read rate, RSSI values, phase angles, and/or the like for the RFID tag. In conventional settings, the RF system may use these observations in making determines such as, for example, determining certain RF tags are in the read field, certain RFID tags have left the read field, certain RFID tags are closer to the antenna than other RF tags, and/or the like.

As previously noted, a common technical challenge is that an RFID tag may be associated with or used in an environment having reflective materials that can attenuate the RF signal leading to "masking' the RFID tag when the tag is within the reader's (e.g., antenna thereof) read field. For example, the RFID tag may be placed on an item that is being stored in a warehouse that has a large amount of metal shelving that is used in storing items. Here, the metal shelving may attenuate the RF signal sent from an antenna placed in the warehouse and used by a reader in interrogating RFID tags placed on items stored on the shelving for inventory purposes.

To elevate this challenge, the RF system may be configured so that the antenna transmits the RF signal at a high transmission power to compensate for the signal being attenuated. However, this solution can lead to further technical challenges in that the RF system can function in a "leaky" manner because at a high-power level, the RF signal can bleed beyond an intended read field. This can lead to false positive reads of a RFID tag at an antenna used for interrogating RFID tags for a certain area when the RFID tag is not actually present in the certain area. In addition, the combination of reflective materials and high-power level can lead to read data that contains data values that are "jumpy," that is the read data can contain data values that fluctuate over a large range in a short period of time. For example, the read data may contain read rates and/or RSSI values that fluctuate over a large range in a short period of time. Such fluctuation can make it difficult for the RF system to identify, with an acceptable level of confidence, that an RFID tag is actually present in the read field.

In various embodiments, the RF system generates data frames from read data collected from an RFID tag. More specifically, the RF system partitions the read data into data frames with respect to an interval of time. For example, the RF system may partition the read data into data frames that include read data collected from the RFID tag over fifty milliseconds, one hundred milliseconds, two hundred milliseconds, and/or the like. As a specific example, the RF system may partition a block of read data that has been collected from the RFID tag for 1 s (one second) into twenty 50 ms (fifty milliseconds) data frames.

Once the RF system has partitioned the read data into the data frames, the RF system generates linearized power values for the power data found in the read data for each of the data frames. Specifically, in various embodiments, the RF system generates a linearized power value for each RSSI value found in each of the data frames for the RFID tag to form a set of linearized power values for the data frame. In some embodiments, the RF system may generate the set of linearized power values based at least in part on the RSSI values and the power value at which the antenna transmitted the RF signal to interrogate the RFID tag to normalize the linearized power values. In addition, the RF system may summate the set of linearized power values for the RFID tag to generate a summated power value for the RFID tag for each of the data frames. As a result, the RF system may transform the power data (e.g., RSSI values) across the data frames into a smoother data set that is more conducive in making determinations about the RFID tag such as, for example, deciding whether the RFID tag is actually located in the read field.

In various embodiments, the RF system (or some other system) may use one or more predicates in evaluating the summated power values for one or more of the data frames. For example, a predicate may define a set of rules (e.g., one or more rules) to identify an RFID tag, or set of RFID tags, which is exhibiting a particular property, behavior, characteristic, feature, and/or the like. Accordingly, the RF system may determine whether one or more summated power values for one or more data frames meet a target predicate. If so, the RF system may then take action (e.g., initial a process) accordingly. For example, the RFID tag may be in close proximity to the antenna and is saturating the reader with read data. That is, the RFID tag may be in close proximity to the antenna and as a result, the RFID tag is responding to the RF signal transmitted by the antenna in a rapid manner so that a majority or a large portion of the read data collected by the antenna is attributable to the RFID tag with respect to other RFID tags located in the antenna's read field. The RF system may evaluate the summated power values for multiple data frames for the RFID tag (e.g., for a sequence of data frames over a time period) with respect to a target predicate defining a set of rules for determining whether the linearized power values for the multiple data frames demonstrate that the RFID tag is saturating the reader with read data. As an illustrative example, the target predicate may define a set of rules that indicate if each of the linearized power values for the RFID tag over the multiple data frames satisfies a threshold power value (e.g., a trend of linearized power values), then the RFID tag is saturating the reader with read data.

If the RFID tag meets the predicate (e.g., is "true"), then the RF system may take action to address the RFID tag saturating the reader with read data. For example, the reader may be configured in a dual target mode with session set to 0 to optimize reads collected from the RFID tags in the read field. Here, the RF system may address the RFID tag saturating the reader with read data by performing an interrupt in reading the RFID tag by setting a targeted read of the RFID tag to single target mode with session set to 1, 2, or 3. As a result, the RFID tag is temporarily quiet for a particular time period or remains quite as long as the RFID tag remains in the read field of the antenna. Therefore, the RFID tag is no longer saturating the reader with read data and the RF system may more easily and/or better evaluate the other RFID tags located in the read field.

In various embodiments, the RF system may be configured to generate linearized power data representing read data received from multiple RFID tags and take action based on the linearized power data for the multiple RFID tags with respect to one another. The RF system may collect read data that includes data on multiple RFID tags that have responded/have been read in an antenna's read field. The RF system may partition the read data into multiple data frames and generate linearized power values for power data found in the multiple data frames. For example, the RF system may generate a linearized power value for each of the RSSI values found in a data frame.

The RF system may group the linearized power values for each of the data frames into subgroups of linearized power values for each of the RFID tags represented in the data frame. The RF system may then summate each of the subgroups of linearized power values for each of the data frames to generate a summated power value for each RFID tag represented in the data frame. As a result, the RF system may transform the power data for the different RFID tags across the data frames into a smoother data set that is more conducive in making determinations about the different RFID tags, as well as making determinations about the different RFID tags with respect to one another.

In various embodiments, the RF system (or some other system) may use the summated power values generated for the different RFID tags for one or more of the data frames in determining whether one or more of the RFID tags meets a target predicate. If so, the RF system may then take action (e.g., initial a process) accordingly. For example, the RF system may involve a mobile device that functions as a reader and antenna. Here, an individual using the mobile device may be interesting in traveling (e.g., walking) through an area of items that have RFID tags attached to them and locating a particular item (e.g., locating the RFID tag attached to the particular item). The items may involve material that is highly reflective, or the area may involve an environment in which material is present that is highly reflective. In addition, the area may be of considerable size. Therefore, the individual may wish to use an RF signal at a high-power level to account for any attenuation that the RF signal may encounter due to the highly reflective material, as well as to cover a sizable read field, in locating the RFID tag attached to the particular item.

As previously noted, the combination of reflective material and high-power level can pose a technical challenge in that the combination of reflective material and high-power level can lead to read data that contains data values that are "jumpy." This can make is quite difficult for the mobile device to make use of the read data in locating the RFID tag attached to the particular item as the individual travels through the area. Accordingly, the mobile device configured according to various embodiments of the disclosure can address this technical challenge by generating linearized power data from the read data collected from the multiple RFID tags located in the area and taking action based on the linearized power data to locate the RFID tag attached to the particular item.

For example, the mobile device (e.g., reader thereof) can make use of one or more predicates that involve evaluating the summated power values for the different RFID tags over one or more of the data frames as the individual travels through the area to direct the individual to the RFID tag attached to the particular item. Here, the individual may identify, via the mobile device, which RFID tag the individual is interested in locating. The mobile device may use a first predicate that involves evaluating (e.g., comparing) the linearized power values for the RFID tags attached to the items for one or more data frames (e.g., a trend thereof) in determining whether the mobile device is currently pointed in a direction in which the RFID tag attached to the particular item is located. Accordingly, the mobile device can use the first predicate in guiding (e.g., pointing) the individual in the right (e.g., correct) direction towards the particular item while the individual is traveling through the area. For example, the first predicate may define a set of rules that evaluates the summated power values for the different RFID tags with respect to each other in determining whether the mobile device is currently pointed in a correction direction towards the RFID tag attached to the particular item. The mobile device may provide the individual with some type of indication that identifies when the mobile device is pointed in the direction that the individual should travel through the area such as displaying an arrow on a user interface of the mobile device, displaying a certain color when the mobile device is pointed in the correct direction, providing a certain audible sound when the mobile device is pointed in the correct direction, and/or the like.

The mobile device may use a second predicate that involves evaluating the strength of the linearized power values for the RFID tag attached to the particular item for one or more data frames in determining when the mobile device is in close proximity to the particular item. For example, the second predicate may define a set of rules that evaluate whether the linearized power values over one or more data frames (e.g., a trend thereof) satisfy a threshold (e.g., satisfy a threshold power value). If so, then the second predicate may resolve to "true" in determining that the mobile device is in close proximity (e.g., within a certain distance) of the RFID tag attached to the particular item. Accordingly, the mobile device may provide the individual with some type of indication that he or she is in close proximity to the RFID tag attached to the particular item such as displaying a proximate distance to the RFID tag on a user interface, displaying a certain color when the device is in close proximity to the RFID tag, providing a certain audible sound when the device is in close proximity to the RFID tag, and/or the like. Therefore, the RF system (e.g., the mobile device) configured according to various embodiments of the disclosure may help to improve the RF system's capabilities in locating specific RFID tags among a group of RFID tags, especially when the group of RFID tags may involve items and/or are in environments that are associate with highly reflective materials.

In various embodiments, the RF system may be configured to generate linearized power data representing read data collected from one or more RFID tags via multiple antennas covering different read fields and take action based on the linearized power data for the one or more RFID tags. For example, the RF system may receive a first data frame that includes read data collected over a first interval of time at a first antenna and a second data frame that includes read data collected over a second interval of time at a second antenna. The first antenna may have an intended read field that covers a first area, and the second antenna may have an intended read field that covers a second, different area. Here, the first and second intervals of time may cover different periods of time and the first data frame, and the second data frame may include read data collected at the first antenna and the second antenna, respectfully, from a RFID tag. For example, the read data may have been collected at the first antenna and the second antenna as the RFID tag traveled from the first area to the second area.

However, as previously noted, a technical challenge that may be faced when the first and/or second antennas are transmitting RF signals at a high-power level is that the RF signals may "bleed" into areas outside of the first and/or second antennas' intended read fields. For example, the RF signal transmitted by the first antenna may bleed into the second antenna's intended read field. Likewise, the RF signal transmitted by the second antenna may bleed into the first antenna's intended read field. As a result, the first antenna may collect read data from the RFID tag after the RFID tag has left the first area and entered the second area, leading to false positive reads of the RFID tag being present in the first area (e.g., in the first antenna's intended read field). Likewise, the second antenna may collect read data from the RFID tag while the RFID tag is still in the first area and before the RFID tag enters the second area, leading to false positive reads of the RFID tag being present in the second area (e.g., in the second antenna's intended read field).

The RF system configured according to various embodiments of this disclosure can help to elevate this technical challenge. In various embodiments, the RF system may be configured to generate linearized power data representing read data collected from the RFID tag at the first and second antennas and take action for the RFID tag based on the linearized power data corresponding to the first and second antennas. For example, the RF system may generate a first linearized power value for each RSSI value found in the first data frame to form a set of first linearized power values and summate the set of first linearized power values to generate a first summated power value. In addition, the RF system may generate a second linearized power value for each RSSI value found in the second data frame to form a set of second linearized power values and summate the set of second linearized power values to generate a second summated power value. The RF system may evaluate the first summated power value and the second summated power value to determine that the RFID tag meets one or more target predicates. The RF system may then take action in response to the RFID tag meeting the one or more target predicates.

For example, the RF system may evaluate the first and second summated power values to determine whether the RFID tag meets a target predicate with respect to the RFID tag moving from the first area to the second area. As an illustrative example, the target predicate may define a set of rules that involve evaluating the first and second summated power values (e.g., trend thereof) to determine whether the first summated power value satisfies a first threshold (e.g., is below a first threshold value) and the second summated power value satisfies a second threshold (e.g., is above a second threshold value), indicating that the RFID tag has moved from the first area to the second area.

In some embodiments, the RF system may provide an indication of the movement of the RFID tag from the first area to the second area. For example, the RF system may generate an indication of the movement for display on a user interface. Additionally, or alternatively, the RF system may initiate a process based at least in part on the movement, such as updating an inventory to reflect the movement of the item to which the RFID tag is attached from the first area to the second area, causing the loading of the item onto a trailer for transporting the item to a third area, causing an automated sorting system found in the second area to sort the item, and/or the like. Accordingly, the RF system configured according to various embodiments of the disclosure may help in better identifying movement of RFID tags (and corresponding items) when using RF signals transmitted in high power ranges. Additional detail is now provided with respect to various aspects of different embodiments of the disclosure.

## Example Configuration of RF System

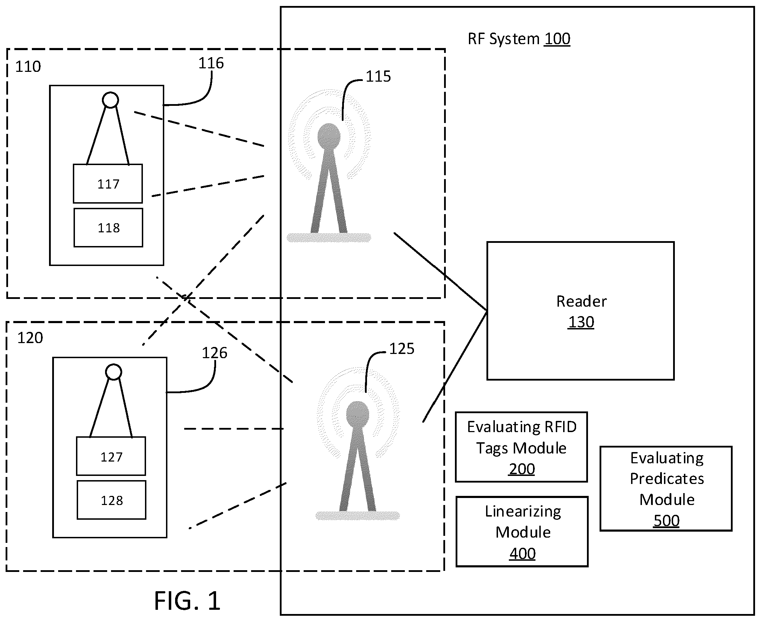

FIG. 1 depicts an example configuration of an RF system 100 used in tracking items that are located within different areas 110, 120 of a production facility. For example, the RF system 100 may involve interrogating RFID tags 116, 126 attached to different items as the items are transported to the different areas 110, 120 of the production facility so that the inventory of items located in any particular area 110, 120 can be identified at any particular time.

The RF system 100 includes antennas 115, 125 positioned in each of the different areas 110, 120 that are configured to have intended read fields that cover the different areas 110, 120. In addition, the RF system 100 includes a reader 130 that controls the antennas 115, 125 with respect to interrogating the RFID tags 116, 126 that are in the corresponding intended read fields. For example, the reader 130 may provide instructions on the power level the antennas 115, 125 are to use in transmitting RF signals to interrogate the RFID tags 116, 126.

The antennas 115, 125 transmit RF signals to the RFID tags 116, 126 and receive return RF signals from the RFID tags 116, 126 attached to the items found in the different areas 110, 120. For example, each of the RFID tags 116, 126 may contain an integrated circuit 117, 127 that is coupled with an antenna to transmit data such as, for example, data identifying the RFID tag 116, 126 and/or corresponding item. In addition, each of the RFID tags 116, 126 may contain memory 118, 128 that stores the data that is transmitted when the RFID tag 116, 126 is activated and/or interrogated using the RF signals in the form of electromagnetic energy transmitted by the antennas 115, 125.

In some instances, the RF system 100 may provide the reader 130 with search criteria to limit the RFID tags 116, 126 and/or corresponding items that the reader 130 searches for in the different areas 110, 120. The search criteria can act as a filter for interrogating RFID tags 116, 126, of interest. Accordingly, the RF system 100 may provide the reader 130 with search criteria involving different types of data with respect to the RFID tags 116, 126 and/or corresponding items such as, for example, item identifiers, item descriptions, item quantities, RFID tag identifiers, production processes, customer identifiers, item recipient identifiers, and/or the like.

The reader 130, via the antennas 115, 125, transmits and receives RF signals in the form of electromagnetic energy to communicate with the RFID tags 116, 126 in the different areas 110, 120. When an RFID tag 116, 126 receives the electromagnetic energy, the integrated circuit 117, 127 for the tag 116, 126 modulates the electromagnetic energy and the tag 116, 126 transmits a return RF signal to the reader 130. The return RF signal can contain read data, such as, for example, an identifier for the tag 116, 126, a strength of the signal, back phase angle, and/or any other data stored on the memory 118, 128 of the RFID tag 116, 126. In turn, the reader 130 may provide the read data to the RF system 100.

The RF system 100 may use the read data in performing various tasks involving the items associated with the RFID tags 116, 126. For example, the RF system 100 may determine that a first level of inventory of the items is in a first area 110 and a second level of inventory of the items in located in a second area 120. The RF system 100 may then initiate a process to have some of the inventory of the items moved from the first area 110 to the second area 120 so that enough of the items is located in the second area 110 for further processing (e.g., manufacturing, sorting, packaging and shipping, and/or the like).

As previously noted, the items associated with the RFID tags 116, 126 may involve material that can be highly reflective and attenuate the RF signals used by the RFID tags 116, 126, and reader 130. Or the environment, itself, may include material that is highly reflective and attenuates the RF signals. As a result, the RF system 100 may have the transmission power of the antennas 115, 125 set high to compensate for the RF signals being attenuated. However, this can lead to the antennas 115, 125 talking over each other and reading RFID tags 116, 126 in neighboring areas 110, 120. Therefore, it can be difficult for the RF system 100 to generate affirmative confirmation that particular items are located in a given area 110, 120.

However, the RF system 100 configured according to various embodiments of the disclosure can help to address (e.g., elevate) this technical challenge, as well as others. In particular embodiments, the RF system 100 makes use of an evaluating RFID tags module 200. The evaluating RFID tags module 200 evaluates return RF signals that have been received from one or more RFID tags 116, 126 that involves linearizing power values (e.g., RSSI values) provided in the read data found in the return RF signals, and evaluating the linearized power values with respect to one or more predicates in determining whether the linearized power values represent a significant event to warrant the RF system 100 (or some other system) taking action concerning the RFID tags 116, 126.

For example, the evaluating RFID tags module 200 may evaluate return RF signals received from a particular RFID tag 116, 126. The evaluating RFID tags module 200, through linearizing the RSSI values provided in the read data of the return RF signals and evaluating the linearized RSSI values via a predicate, may determine that the particular RFID tag 116, 126 is oversaturating the reader 130 (e.g., is responding with return RF signals too often). The RF system 100 may respond to the oversaturation by changing the session mode for the RFID tag 116, 126 so that the tag 116, 126 is no longer responding or is responding at a reduced rate. Accordingly, in various embodiments, the evaluating RFID tags module 200 linearizing the RSSI values to generate linearized power values, and evaluating the linearized power values using the predicate, can help the RF system 100 to recognize when an RFID tag 116, 126 is oversaturating the reader 130 better than had the RF system 100 simply relied on the read data found in the return RF signals to do so.

In particular embodiments, the evaluating RFID tags module 200 executes (e.g., invokes) a linearizing module 400 to generate the linearized power values from the RSSI values found in the read data. As discussed further herein, the linearizing module 400 may generate the linearized power values from the RSSI values and may group the linearized power values according to RFID tag 116, 126 and/or antenna 115, 125. In addition, the linearizing module 400 may summate the linearized power values to provide a summated power value that is more indicative of an RFID tag's behavior, properties, characteristics, features and/or the like.

Additionally, or alternatively, the evaluating RFID tags module 200 executes (e.g., invokes) an evaluating predicates module 500 to conduct the evaluation of one or more linearized power values for one or more RFID tags 116, 126 with respect to one or more target predicates. As discussed further herein, the evaluating predicates module 500 may evaluate the linearized power values for the one or more RFID tags 116, 126 to determine whether the linearized power values match one or more of the target predicates. If so, then the evaluating predicates module 500 may provide the RF system 100, or some other system, with data indicating that the linearized power values for the one or more RFID tags 116, 126 match a predicate. Accordingly, the RF system 100, or some other system, may then use the data in performing one or more actions with respect to the one or more RFID tags 116, 126, such as, for example, providing an indication (e.g., electronic verification) to a production system to update inventory records to reflect that a particular item associated with an RFID tag 116, 126 is currently being stored in a particular area of a facility.

It is noted that FIG. 1 provides an example configuration of an RF system 100 according to various embodiments of the disclosure. However, the configuration of the RF system 100 may vary depending on the embodiment. For example, the configuration of the RF system 100 may be in the form of a mobile device such as equipment that can be moved from one location of a facility to another, or a handheld mobile device that can be carried by personnel as they travel (e.g., walk) through the facility. Further detail on aspects of the evaluating RFID tags module 200, linearizing module 400, and evaluating predicates module 500 according to various embodiments is now provided.

### Evaluating RFID Tags Module

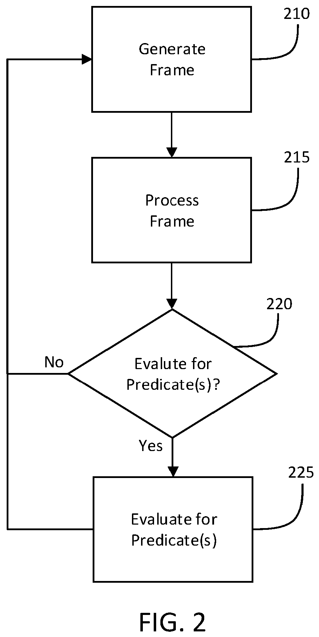

Turning now to FIG. 2, additional details are provided regarding an evaluating RFID tags module 200 used for evaluating returned RF signals received from one or more RFID tags 116, 126 in accordance with various embodiments. Accordingly, the flow diagram shown in FIG. 2 may correspond to operations carried out, for example, by computing hardware found in an RF system 100 as described herein, as the computing hardware executes the evaluating RFID tags module 200.

The process involves the evaluating RFID tags module 200 generating a data frame in Operation 210. For example, the evaluating RFID tags module 200 may receive read data that was collected via one or more return RF signals received from one or more RFID tags 116, 126 at an antenna 115, 125, or at multiple antennas 115, 125. In some embodiments, the evaluating RFID tags module 200 may be receiving the read data in virtually real time as the read data is being collected by the reader 130. Additionally, or alternatively, the evaluating RFID tags module 200 may be receiving the read data after some time has passed since the read data was collected by the reader 130. For example, the evaluating RFID tags module 200 may be receiving the read data after the data has been batched for a certain period of time such as data collected over two second, five seconds, ten seconds, and/or the like.

In various embodiments, the evaluating RFID tags module 200 generates the data frame from the read data based on two parameters. The first parameter is frame size. The frame size identifies the amount of read data that makes up a data frame. For example, the frame size may identify that a data frame comprises read data collected over twenty-five milliseconds, fifty milliseconds, one hundred milliseconds, and/or the like. The second parameter is frame interval. The frame interval identifies how often the evaluating RFID tags module 200 should generate a data frame from the read data. For example, the frame interval may identify that the evaluating RFID tags module 200 is to generate a data frame from the read data every two seconds.

In particular embodiments, these two parameters can be used in regulating the responsiveness of the evaluating RFID tags module 200. For example, the frame size can be set to a relatively low value to suppress "jumpiness" of reads of the different RFID tags 116, 126 that can lead to false reads and/or over reading of tags 116, 126. However, a relatively low fame size can result in missing a read of one or more RFID tags 116, 126. The frame interval can help to offset this effect by allowing for the evaluation of a set of data frames for a particular RFID tag 116, 126 that covers a particular length of time in which the particular RFID tag116, 126 is likely to have been read, even if a read was missed in a particular data frame.

The data frame may include various types of data. For example, the data frame may include identifiers for one or more RFID tags 116, 126 that were read during the time the data frame covers. In addition, each data frame may include RSSI values associated with the return RF signals received from the one or more RFID tags 116, 126. Depending on the frame size, in some instances, a RFID tag 116, 126 may have been read multiple times during the time interval represented by the data frame. Response counts and times of an RFID tag 116, 126 are generally dependent on the signal transmitted by an antenna 115, 125 successfully reaching the tag 116, 126, activating it, and a signal successfully being returned from the tag 116, 126. For example, a particular RFID tag 116, 126 may be in close proximity to the antenna 115, 125 and may have a very quick response time (e.g., of 0.4 milliseconds). As a result, the RF system 100 may have read the particular RFID tag 116, 126 several times during a data frame that included read data collected over fifty milliseconds, one hundred milliseconds, two hundred milliseconds, etc. Further, RFID tags 116, 126 in extremely close proximity and/or ideal angles with respect to an antenna 115, 125 can reach an upper limit on the number of responses in a short amount of time.

In Operation 215, the evaluating RFID tags module 200 processes the data frame to generate one or more linearized power values from the RSSI values found in the data frame. In particular embodiments, the evaluating RFID tags module 200 performs this particular operation by executing (e.g., invoking) a linearizing module 400. The linearizing module 400 generates a linearized power value for each RSSI value found in the data frame. In addition, the linearizing module 400 may group the linearized power values by RFID tag 116, 126, antenna 115, 125 (e.g., "collection point"), and/or combination thereof. Further, the linearizing module 400 may summate the linearized power values for each RFID tag 116, 126, antenna 115, 125, and/or combination thereof to generate a summated power value for the RFID tag 116, 126, antenna 115, 125, and/or combination thereof.

For example, if the data frame includes read data that was collected at multiple antennas 115, 125, then the linearizing module 400 may generate a summated power value for each of the RFID tags 116, 126 represented in the data frame at each of the antennas 115, 125 at which the tag 116, 126 was read. More specifically, if the data frame includes read data for ten RFID tags 116, 126 that was collected at two different antennas 115, 125, then the linearizing module 400 may generate twenty summated power values, two summated power values for each RFID tag 116, 126, with one of the summated power values representing one of the two different antennas 115, 125, if all ten RFID tags 116, 126 were read at both antennas 115, 125 during the time the read data represented by the data frame was collected.

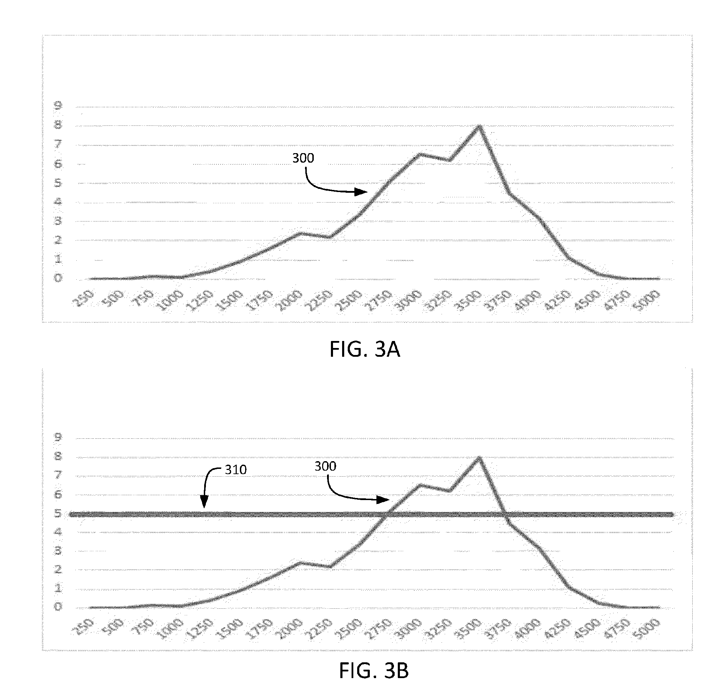

Thus, the evaluating RFID tags module's 200 continued processing of data frames from the read data over a period of time in various embodiments may result in generating a rolling data set of power values that provides a time series on what the RF environment looks like (e.g., how the RF environment is trending) for every RFID tag 116, 126 at every antenna 115, 125 at virtually every point in time. Further, the evaluating RFID tags module 200 providing the rolling data set in a linearized form for the different RFID tags 116, 126 may provide the power data (e.g., values) in a format that is more conductive for use in evaluating the behavior, properties, characteristics, features, and/or the like of the RFID tags 116, 126. An example of a graphical representation of such a rolling data set is shown in FIG. 3A. The rolling data set 300 includes power values that have been linearized over 250 millisecond data frames that have been collected over a continuous period of time.

In Operation 220, the evaluating RFID tags module 200 determines whether the summated power values for the data frame are to be evaluated with respect to one or more target predicates. As an illustrative example, a facility may be interested in accurately tracking items (e.g., manufactured goods) as they are transported through the facility. Here, the items may be associated with RFID tags 116, 126 and stored in different locations throughout the facility. Antennas 115, 125 may be placed at the different locations to interrogate the RFID tags 116, 126 as the items are transported through the facility, collect read data accordingly, and communicate the read data to a reader 130.

The facility may define a predicate that involves evaluating the summated power values for an RFID tag 116, 126 over a set of data frames covering an amount of time (e.g., two minutes, five minutes, thirty minutes, etc.). The purpose of predicate may be to determine whether a particular item has been transported from a first location in the facility to a second, different location in the facility. That is to say, the purpose of the predicate may be to track the inventory of the items as they are transported through the facility. The facility may be interested in evaluating the summated power values for an RFID tag 116, 126 every thirty minutes.

Therefore, the evaluating RFID tags module 200 may determine whether the data frame includes a summated power value for a particular tag 116, 126 that has not been evaluated via the predicate in the last thirty minutes (e.g., whether the time since the last evaluation of the particular RFID tag 116, 126 via the predicate satisfies a threshold of thirty minutes). If so, then the evaluating RFID tags module 200 determines that the summated power value for the particular RFID tag 116, 126 is to be evaluated with respect to the predicate.

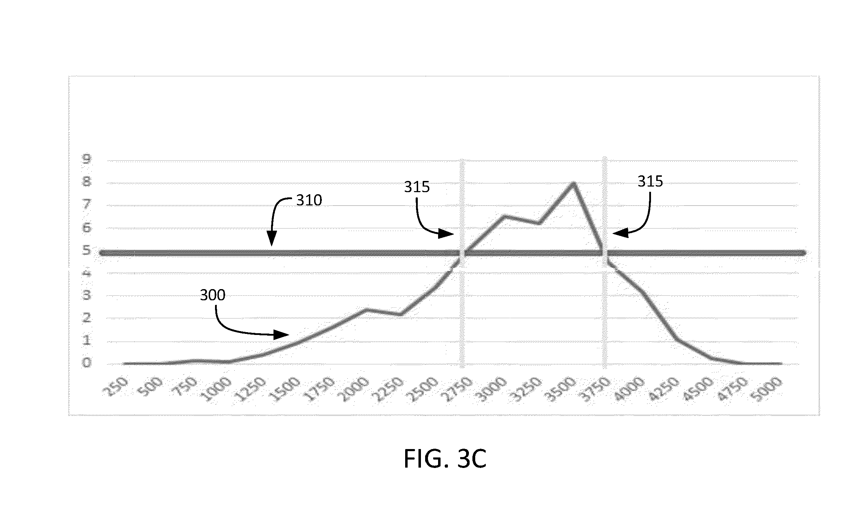

As a result of determining the data frame is the be evaluated, the evaluating RFID tags module 200 evaluates the data frame for the one or more target predicates in Operation 225. In particular embodiments, the evaluating RFID tags module 200 performs this particular operation by executing (e.g., invoking) an evaluating predicates module 500. The evaluating predicates module 500 conducts the evaluation of the data frame with respect to the one or more target predicates. For example, the evaluating predicates module 500 may evaluate whether a rolling data set of linearized power values 300 for an RFID tag 116, 126 collected at a particular antenna 115, 125 has satisfied a threshold 310 as shown in FIG. 3B. As another example, the evaluating predicates module 500 may evaluate whether a rolling data set of linearized power values 300 for an RFID tag 116, 126 collected at a particular antenna 115, 125 has satisfied a threshold 310 for a certain period of time (consecutive number of frames) 315 as shown in FIG. 3C.

If the evaluating predicates module 500 determines that one or more RFID tags 116, 126 represented in the data frame meet a predicate, then the evaluating predicates module 500 may provide the data to one or more dependents indicating such. In general, a "dependent" may be a device or system that then uses the data received from the evaluating predicates module 500 in initiating, processing, causing, and/or the like an action to address the frame data. For example, a dependent may be an inventory system that updates inventory records based at least in part on the data to reflect that an item has been moved from a first location of a facility to a second location of the facility.

At this point, the evaluating RFID tags module 200 may return to Operation 210 and generate another data frame from read data received by the evaluating RFID tags module 200. The evaluating RFID tags module 200 may then process the data frame in the same manner as just discussed. Further detail is provided herein on the linearizing and evaluating predicates modules 400, 500.

## Linearizing Module

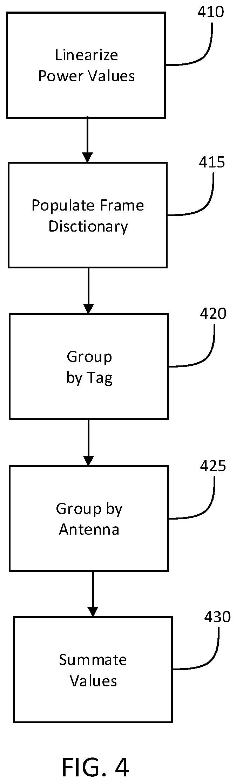

Turning now to FIG. 4, additional details are provided regarding a linearizing module 400 used for linearizing one or more RSSI values found in a data frame representing read data collected from one or more RFID tags in accordance with various embodiments. Accordingly, the flow diagram shown in FIG. 4 may correspond to operations carried out, for example, by computing hardware found in a RF system 100 as described herein, as the computing hardware executes the linearizing module 400.

The process involves the linearizing module 400 linearizing the RSSI values found in the data frame in Operation 410 to form a set of linearized power values. RSSI values provide a measure of the strength of the RF signal received from an RFID tag 116, 126 at an antenna 115, 125. The closer an RFID tag 116, 126 is to the antenna 115, 125, the stronger the RSSI value is received at the antenna 115, 125 from a read of the RFID tag 116, 126. Conventionally, the RSSI values are often used in locating RFID tags 116, 126. However, as previously noted, a combination of reflective materials and a RF signal at a high-power level can lead to read data that contains RSSI values that are "jumpy," that is the RSSI values can fluctuate over a large range in a short period of time. In addition, other environmental factors may lead to "jumpy" RSSI values such as how a person, equipment, etc. may be moving/manipulating an RFID tag 116, 126, the distance an RFID tag 116, 126 is to an antenna 115, 125, or even the channel in use. As a result, conventional practices may face technical challenges in using RSSI values for various purposes such as using RSSI values for locating certain RFID tags 116, 126 in a particular location.

In various embodiments, the linearizing module 400 addresses this issue by linearizing the RSSI values found in a data frame. An RSSI value is provided in a unit of decibel-milliwatts (dBm). Decibel-milliwatts express a power level in decibels (dB) with reference to one milliwatt (mW). Power can be expressed in dBm as $10 log_{10} \frac{P}{1mW}$. Therefore, decibel-milliwatts express a RSSI value as logarithm. A common reason for using dB is because dB can provide an easy linear measure for a single read. However, dB is not always ideal for instances where actions may be taken that are specific with repeated observations. The linearizing module 400 converting the RSSI values to linearized values may help to smooth out the "jumpiness" seen in the RSSI values.

In particular embodiments, the linearizing module 400 may also normalize the RSSI values with respect to the power level at which the antenna 115, 125 is emitting the RF signal. In a multiantenna environment, normalizing the RSSI values can provide a benefit of allow for performing actions for a trend where an item having an RFID tag 116, 126 is moved from a read field of a first antenna 115 to a read field of a second antenna 125, gets placed in the middle therefore, and/or the like.

As an illustrative example, the linearizing module 400 may generate the linearized power values from the RSSI values using the formula:

$$P_{watts} = \left(10^{P_{dBmreturned} - P_{dBmoutput}}\right)^{1/10}$$

Where, $P_{dBmreturned}$ is the RSSI value and $P_{dBmoutput}$ is the power level of the RS signal sent by the antenna 115, 125.

In Operation 415, the linearizing module 400 populates a frame dictionary with the set of linearized power values. For example, the frame dictionary may be stored in some type of storage media found in the RF system 100 or some other system. In particular embodiments, the linearizing module 400 may perform this operation so that the set of normalized power values for the data frame are available for further processing by the linearizing module 400, or some other module, device, system, and/or the like. In addition, the linearizing module 400 may populate the frame dictionary with identifiers that identify the RFID tags 116, 126 associated with the linearized power values and/or identifiers that identify the antennas 115, 125 associated with the linearized power values.

In Operation 420, the linearizing module 400 may group the set of linearized power values by RFID tag 116, 126 to form groups of linearized power values, with each group associated with a particular RFID tag 116, 126. For example, the linearizing module 400 may group the set of linearized power values within the frame dictionary by RFID tag 116, 126 into groups of linearized power values.

Additionally, or alternatively, the linearizing module 400 may group the set of linearized power values by antenna 115, 125 in Operation 425. For example, the linearizing module 400 may group the set of linearized power values within the frame dictionary by antennas 115, 125 into groups of linearized power values.

In some embodiments, the linearizing module 400 may group the set of linearized power values by RFID tag 116, 126 into groups of linearized power values for each RFID tag 116, 126, and then group each of the groups of linearized power values by antenna 115, 125 into subgroups of linearized power values. As a result, the frame dictionary may have the set of linearized power values broken down into groups of linearized power values by RFID tag 116, 126, with each group of linearized power values broken down into subgroups of linearized power values by antenna 115, 125.

In Operation 430, the linearizing module 400 may generate one or more summated power values. For example, the linearizing module 400 may generate a summated power value for the data frame by summing together the linearized power values for the data frame. Additionally, or alternatively, the linearizing module 400 may generate a summated power value for each group of linearized power values associated with a particular RFID tag 116, 126 by summing together the linearized power values found in each group of linearized power values. Additionally, or alternatively, the linearizing module 400 may generate a summated power value for each group of linearized power values associated with a particular antenna 115, 125 by summing together the linearized power values found in each group of linearized power values. Additionally, or alternatively, the linearizing module 400 may generate a summated power value for each subgroup of linearized power values associated with a particular RFID tag 116, 126 and antenna 115, 125 by summing together the linearized power values found in each subgroup of linearized power values.

Accordingly, the linearizing module 400 may be configured to generate the one or more summated power values based at least in part on the use of the one or more summated power values. For example, the linearizing module 400 may be configured to generate the one or more summated power values based at least in part on the predicates used in evaluating the one or more summated power values. As an illustrative example, a facility may have developed a predicate for the purpose of evaluating summated power values to identify when RFID tags (and their associated items) have been moved from a first location to a second location at the facility. In this example, the linearizing module 400 may be configured to generate a summated power value for each subgroup of linearized power values associated with a particular RFID tag 116, 126 and antenna 115 so that the summated power values for a particular RFID tag 116, 126 can be evaluated with respect to the predicate to determine that the RFID tag (and associated item) has been moved from a first location to a second location at the facility. In some embodiments, the linearizing module 300 may store the generated summated power values in the frame dictionary.

## Evaluating Predicates Module

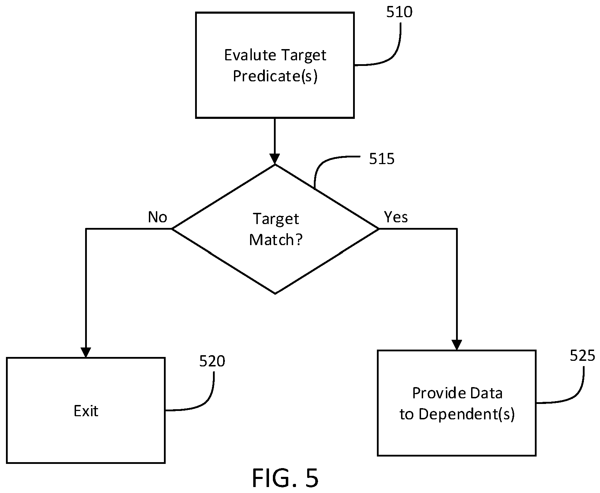

Turning now to FIG. 5, additional details are provided regarding an evaluating predicates module 500 used for conducting an evaluation of linearized power values (e.g., linearized power values that have been summated) for one or more RFID tags 116, 126, antennas 115, 125, and/or combination thereof with respect to one or more target predicates in accordance with various embodiments. Accordingly, the flow diagram shown in FIG. 5 may correspond to operations carried out, for example, by computing hardware found in a RF system 100 as described herein, as the computing hardware executes the evaluating predicates module 500.

In general, a "predicate" can be considered a function that evaluates a set of parameters and returns an answer such as a Boolean. The predicate may define a set of rules (e.g., one or more rules) that detail how the set of parameters are to be evaluated to answer whether predicate resolves to "true." As an illustrative example, a predicate may involve evaluating summated power values for an RFID tag 116, 126 over twenty consecutive data frames read at an antenna 115, 125 (e.g., evaluating a trend of summated power values) to determine whether the summated power value for each data frame (or the average summated power value over the twenty data frames) satisfies a threshold. If so (e.g., the predicate resolves to "true"), then the RFID tag 116, 126 is determined to be saturating the antenna 115, 125, and corresponding reader 130, with read data. The RF system 100 may then take action to address the saturation such as performing an interrupt in reading the RFID tag 116, 126 for a period of time.

The process involves the evaluating predicates module 500 evaluating the data frame with respect to one or more target predicates in Operation 510. The evaluating predicates module 500 may initially identify the target predicates that are to be used in evaluating the data frame. In some embodiments, the evaluating predicates module 500 may be provided with data identifying the target predicates. For example, the evaluating RFID tags module 200 may provide data identifying the target predicates to the evaluating predicates module 500. In other embodiments, the evaluating predicates module 500 may identify the target predicates by querying a data source of predicates and identifying those predicates that are applicable to the data frame. For example, one or more predicates may be defined for a particular group of antennas 115, 125 being used within a facility to read RFID tags 116, 126 placed on items as the items are being moved through the facility. Here, the evaluating predicates module 500 may determine that the data frame originated from read data collected at one of the antennas 115, 125 and therefore the predicate is applicable to the data frame (e.g., the predicate is a "target" predicate for the data frame).

In addition, the evaluating predicates module 500 may retrieve other data frames that may be applicable in evaluating the current data frame with respect to the one or more target predicates. For example, the evaluating predicates module 500 may retrieve data frames collected over past time intervals from the data frame dictionary. Further, the evaluating predicates module 500 may apply criteria (one or more query parameters) in retrieving specific data (e.g., specific summated power values) from the past data frames such as criteria to retrieve summated power values that are applicable to one or more specific RFID tags 116, 126, one or more specific antennas 115, 125, one or more specific combinations of RFID tag 116, 126 and antenna 115, 125, and/or the like.

The evaluating predicates module 500 evaluates the data frame, in conjunction with other data frames if applicable, with respect to the one or more target predicates and determines whether any of the one or more target predicates are a match (e.g., resolve to "true") for the data frame in Operation 515. If not, then the evaluating predicates module 500 may simply exit in Operation 520. However, if any of the one or more predicates is a match, then the evaluating predicates module 500 may provide some type of data to one or more dependents that may then take some action to address the match for the data frame in Operation 525.

For example, a dependent may be a mobile device that an individual is using in locating an RFID tag 116, 126 as the individual travels (e.g., walks) through a facility. Here, the evaluating predicates module 500 may reside on the mobile device and the target predicate may involve evaluating the summated power values provided in one or more data frames for the RFID tag 116, 126 in determining whether the individual is traveling in a right direction towards the RFID tag 116, 126. The evaluating predicates module 500 may provide the mobile device with data indicating whether the mobile device is currently pointed in a correct direction towards the location of the RFID tag 116, 126. In turn, the mobile device may process the data and provide the individual with an indication as to whether the mobile device is pointed in a right direction so that the individual may then adjust his or her direction of travel if needed. For example, the mobile device may display an indication of a direction (e.g., arrow) on a user interface of the mobile device, cause a visual indication to be provided (e.g., causing a light to illuminate green), cause a particular audio to be provided (e.g., causing a particular "beeping"), and/or the like.

In another example, the dependent may be the RF system 100, itself. The target predicate may involve evaluating the summated power values provided in one or more data frames for the RFID tags 116, 126 represented in the data frames in determining whether any of the RFID tags 116, 126 is saturating an antenna 115, 125, and corresponding reader 130, with read data that make up part of the RF system 100. The evaluating predicates module 500 may provide the RF system 100 with data indicating one or more of the RFID tags 116, 126 are saturating the antenna 115, 125 with read data. The RF system 100 may then take action with respect to the one or more RIFD tags 116, 126 by having the reader 130 target the RFID tags 116, 126 to cause an interrupt in collecting read data from the RFID tags 116, 126.

In yet another example, the dependent may be another system that is independent of the RF system 100, such as an inventory system used in tracking items that are manufactured at a facility as the items are moved to different locations of the facility. The target predicate may involve evaluating the data frame, along with other data frames if applicable, to determine whether particular items have been moved from a first location to a second location of the facility. For example, the target predicate may evaluate the data frame, along with data frames representing read data collected at multiple antennas 115, 125 for multiple RFID tags 116, 126, in determining whether the summated power values at the multiple antennas 115 125 represents a significant event has occurred for a particular RFID tag 116, 126 that indicates the corresponding item has been moved from a first location to a second location of the facility.

As an illustrative example, the predicate may involve evaluating the summated power values for the particular RFID tag 116, 126 over multiple data frames (e.g., trends thereof) representing read data collected at a first antenna 115, 125 at the first location and at a second antenna 115, 125 at the second location to determine whether the summated power values show a significance deviation at the first and second antennas 115, 125 (e.g., the summated power values peaking and then dropping out at the first antenna 115, 125 and the summated power values appearing and then peaking at the second antenna 115, 125) that indicates the particular RFID tag 116, 126, and corresponding item, has been moved from the first location to the second location. The evaluating predicates module 500 may provide data to the inventory system indicating such so that the inventory system can then update inventory records showing the item has been moved from the first location to the second location. Accordingly, the evaluating predicates module 500 may conduct evaluations with respect to various types of predicates and may provide data to various types of dependents.

## Example Technical Platforms

Embodiments of the present disclosure may be implemented in various ways, including as computer program products that comprise articles of manufacture. Such computer program products may include one or more software components including, for example, software objects, methods, data structures, and/or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query, or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such computer-readable storage media include all non-transitory computer-readable media (including volatile and non-volatile media). A computer program product does not include a transitory medium.

In some embodiments, a non-volatile computer-readable storage medium may include a floppy disk, flexible disk, hard disk, solid-state storage (SSS) (e.g., a solid-state drive (SSD), solid state card (SSC), solid state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

In some embodiments, a volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where various embodiments are described to use a computer-readable storage medium, other types of computer-readable storage media may be substituted for or used in addition to the computer-readable storage media described above.

Various embodiments of the present disclosure may also be implemented as methods, apparatuses, systems, computing devices, computing entities, and/or the like. As such, various embodiments of the present disclosure may take the form of a data structure, apparatus, system, computing device, computing entity, and/or the like executing instructions stored on a computer-readable storage medium to perform certain steps or operations. Thus, various embodiments of the present disclosure also may take the form of entirely hardware, entirely computer program product, and/or a combination of computer program product and hardware performing certain steps or operations.

Various embodiments of the present disclosure are described herein with reference to block diagrams and flowchart illustrations. Thus, each block of the block diagrams and flowchart illustrations may be implemented in the form of a computer program product, an entirely hardware embodiment, a combination of hardware and computer program products, and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some examples of embodiments, retrieval, loading, and/or execution may be performed in parallel such that multiple instructions are retrieved, loaded, and/or executed together. Thus, such embodiments can produce specially configured machines performing the steps or operations specified in the block diagrams and flowchart illustrations. Accordingly, the block diagrams and flowchart illustrations support various combinations of embodiments for performing the specified instructions, operations, or steps.

Example System Architecture

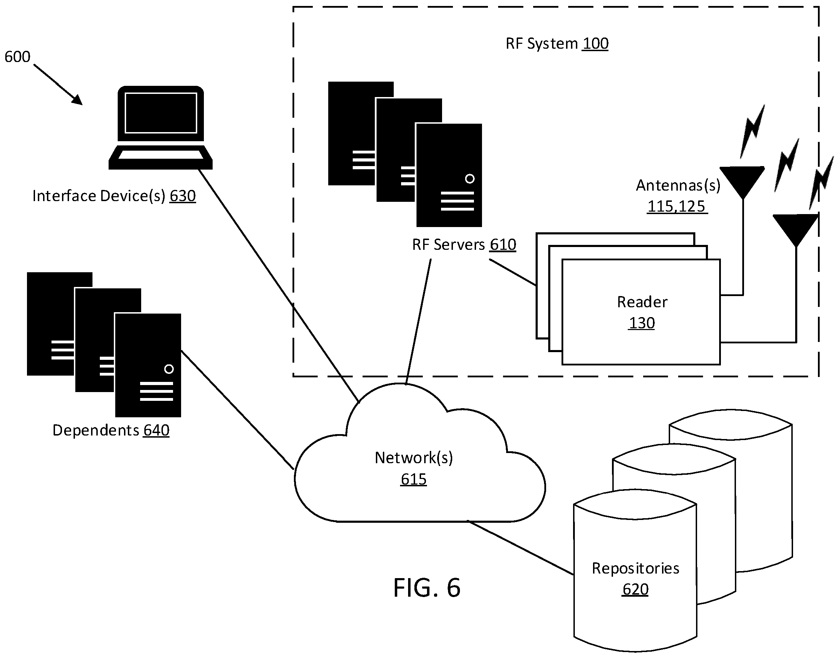

FIG. 6 is a block diagram of a system architecture 600 that can be used in accordance with various embodiments of the disclosure as detailed herein. As may be understood from FIG. 6, the system architecture 600 may include an RF system 100 that comprises one or more readers 130 and one or more RF servers 610. The reader(s) 130 may be in communication with one or more antennas 115, 125, and the one or more antennas 115, 125 may receive read data from various RFID tags 116, 126 (not shown).

The RF server(s) 610 may be in communication over one or more networks 615 with one or more data repositories 620. For example, the data repositor(ies) 620 may be used in storing one or more data frame dictionaries as detailed herein. In addition, the data repositor(ies) 620 may be used in storing predicates as detailed herein. Although the reader(s) 130, the RF server(s) 610, and repositor(ies) 620 are shown as separate components, these components 130, 610, 620, in various embodiments, may comprise a single reader, server, and/or repository, a plurality of readers, servers, and/or repositories, one or more cloud-based readers, servers, and/or repositories, or any other suitable configuration.

The RF server(s) 610 may also be in communication over the one or more networks 615 with one or more dependents 640 that may be, for example, devices, systems, and/or the like. The RF server(s) 610 may communicate with these dependents 640 to provide data based at least in part on evaluations conducted on one or more data frames representing read data collected from one or more RFID tags 116, 126 with respect to one or more predicates. As detailed herein, the dependents may take actions based at least in part on the data received from the RF server(s) 610.

Further, the RF server(s) 610 may be in communication over the one or more networks 615 with one or more interface devices 630. For example, the interface device(s) 630 may be devices associated with individuals who are interesting in viewing data frames for RFID tags 116, 126, antennas 115, 125, combinations thereof, and/or the like. The RF server(s) 610 may provide the interface device(s) 630 with one or more user interfaces that facilitate the individuals viewing the data frames. For example, the RF server(s) 610 may provide one or more webpages through a website that is accessible via browser applications residing on the interface device(s) 630.

According, the reader(s) 130 and/or RF server(s) 610 may execute an evaluating RFID tags module 200, a linearizing module 400, and an evaluating predicates module 500 as described herein. Further, the reader(s) 130 and/or the RF server(s) 610 may provide one or more interfaces that allow the RF system 100 to communicate with dependent(s) 640 such as one or more suitable application programming interfaces (APIs), direct connections, and/or the like.

It is noted that the system architecture 600 shows but one configuration of the RF system 100 and that over configurations are possible. For example, the RF system 100 according to some embodiments may be a mobile device that comprises a reader 130 and an antenna 115, 125 that can be used in collecting read data from RFID tags 116, 126. In addition, the mobile device may include memory the stores the evaluating RFID tags module 200, the linearizing module 400, and/or the evaluating predicates module 500. In addition, the memory may be used for storing data frame dictionaries and/or predicates. Further, the mobile device may include one or more processors that execute the modules 200, 400, 500.

Example Computing Hardware

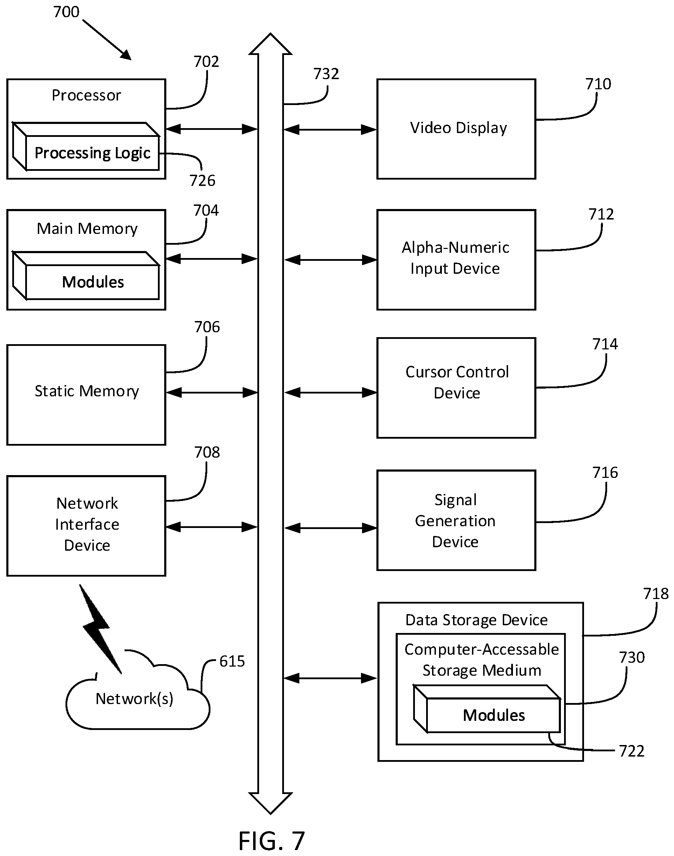

FIG. 7 illustrates a diagrammatic representation of computing hardware 700 that can be used within the system architecture 600. For example, the computing hardware 700 may be an RF server 610, dependent 640, and/or an interface device 630, as described in FIG. 6. In particular embodiments, the computing hardware 700 may be suitable for use as a computer within the context of the system architecture 600 that is configured to facilitate generating and evaluating linearized data values based at least in part on read data collected from RFID tags 116, 126.

In various embodiments, the computing hardware 700 may be connected (e.g., networked) to other computing hardware in a LAN, an intranet, an extranet, and/or the Internet. The computing hardware 700 may operate in the capacity of a server, a client computer in a client-server network environment, a peer computer in a peer-to-peer (or distributed) network environment, and/or the like. The computing hardware 700 may be, for example, a desktop personal computer (PC), a tablet PC, a set-top box (STB), a Personal Digital Assistant (PDA), a cellular telephone, a web appliance, a server, a network router, a switch or bridge, or any other computing hardware capable of executing a set of instructions (sequential or otherwise) that specify actions to be taken by the computing hardware. Further, while the computing hardware 700 is shown as a single computing entity in FIG. 7, the term "computing hardware" shall also be taken to include any collection of computing entities that individually or jointly execute a set (or multiple sets) of instructions to perform any one or more of the methodologies discussed herein.

The computing hardware 700 includes a processing device 702, a main memory 704 (e.g., read-only memory (ROM), flash memory, dynamic random access memory (DRAM) such as synchronous DRAM (SDRAM) or Rambus DRAM (RDRAM), etc.), a static memory 706 (e.g., flash memory, static random access memory (SRAM), etc.), and a data storage device 518, which communicate with each other via a bus 732.

The processing device 702 represents one or more general-purpose processing devices such as a microprocessor, a central processing unit, and/or the like. More particularly, the processing device 702 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. The processing device 702 may also be one or more special-purpose processing devices such as an application specific integrated circuit (ASIC), a field programmable gate array (FPGA), a digital signal processor (DSP), network processor, or the like. The processing device 702 may be configured to execute processing logic 726 for performing various operations, steps, and/or the like as discussed herein.

The computing hardware 700 may further include a network interface device 708. The computing hardware 700 also may include a video display unit 710 (e.g., a liquid crystal display (LCD) or a cathode ray tube (CRT)), an alphanumeric input device 712 (e.g., a keyboard), a cursor control device 714 (e.g., a mouse), and a signal generation device 716 (e.g., a speaker).

The data storage device 718 may include a non-transitory computer-accessible storage medium 730 (also known as a non-transitory computer-readable storage medium or a non-transitory computer-readable medium) on which is stored one or more modules 722 (e.g., one or more sets of instructions in the form of software) such as the evaluating RFID tags module 200, the linearizing module 400, and the evaluating predicates module 500 as described herein. The modules 722 may also reside, completely or at least partially, within the main memory 704 and/or within the processing device 702 during execution thereof by the computing hardware 700. In this capacity, the main memory 704 and the processing device 702 can also constitute computer-accessible storage media. The modules 722 may further be transmitted or received over one or more networks 615 via a network interface device 708.

While the computer-accessible storage medium 730 is shown in FIG. 7 to be a single medium, the term "computer-accessible storage medium" should be understood to include a single medium or multiple media (e.g., a centralized or distributed database, and/or associated caches and servers) that store the one or more sets of instructions. The term "computer-accessible storage medium" should also be understood to include any medium that is capable of storing, encoding or carrying a set of instructions for execution by the computing hardware 700 and that cause the computing hardware 700 to perform any one or more of the methodologies of the present disclosure. The term "computer-accessible storage medium" should accordingly be understood to include, but not be limited to, solid-state memories, optical and magnetic media, etc.

System Operation

The logical operations described herein may be implemented (1) as a sequence of computer implemented acts or one or more program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, steps, structural devices, acts, or modules. These states, operations, steps, structural devices, acts, and modules may be implemented in software, in firmware, in special purpose digital logic, and any combination thereof. Greater or fewer operations may be performed than shown in the figures and described herein. These operations also may be performed in a different order than those described herein.

**Claims**

1. A method comprising:

   receiving, by computing hardware, a data frame, wherein:

   the data frame comprises read data collected from a radio frequency identification , RFID, tag (116, 126) over an interval of time, the read data is collected from the RFID tag (116, 126) responding to receiving a radio frequency, RF, signal sent from an antenna (115, 125) in communication with a reader (130), and
   the read data comprises a plurality of received signal strength indicator, RSSI, values;

   generating, by the computing hardware, a linearized power value for each RSSI value of the plurality of RSSI values to form a set of linearized power values for the data frame; and
   summating, by the computing hardware, the set of linearized power values to generate a summated power value for the data frame;
   **characterized by** the method comprising:

   evaluating, by the computing hardware, the summated power value for the data frame, along with one or more other summated power values for one or more other data frames, to determine that the summated power value and the one or more other summated power values meet a target predicate, wherein the target predicate defines a set of rules used in evaluating whether the summated power value and the one or more other summated power values satisfy a threshold value; and
   responsive to determining the summated power value and the one or more other summated power values meet the target predicate, causing an action to be performed with respect to the RFID tag (116, 126).

2. The method of claim 1, wherein the action comprises changing a setting of the reader (130) to a single target mode to initiate an interrupt of a read of the RFID tag (116, 126).

3. The method of any of claims 1 to 2, wherein the one or more other data frames are one or more previous data frames comprising read data collected from the RFID tag at a previous time.

4. The method of any of claims 1 to 3, wherein generating the linearized power value for each RSSI value of the plurality of RSSI values comprises normalizing the RSSI value based at least in part on a power value of the RF signal sent from the antenna.

5. A system comprising:

   a computer-readable medium storing instructions; and
   a processing device communicatively coupled to the computer-readable medium, wherein the processing device is configured to execute the instructions and thereby perform operations comprising:

   receiving a plurality of data frames, wherein:

   each data frame of the plurality of data frames comprises read data collected from a plurality of radio frequency identification, RFID, tags (116, 126) over an interval of time,
   the read data is collected from the plurality of RFID tags (116, 126) responding to receiving a radio frequency, RF, signal sent from an antenna (115, 125) in communication with a reader (130), and
   the read data comprises a plurality of received signal strength indicator, RSSI, values;

for each data frame of the plurality of data frames:

generating a linearized power value for each RSSI value of the plurality of RSSI values to form a set of linearized power values for the data frame; and
for each RFID tag (116, 126) in the plurality of tags represented in the data frame:

grouping the linearized power values found in the set of linearized power values for the RFID tag (116, 126) into a group of linearized power values; and
summating the group of linearized power values to generate a summated power value for the RFID tag (116, 126) and the data frame;

**characterized in**
**that** the processing device is configured to execute the instructions and thereby perform operations comprising:

evaluating the summated power value for each data frame of the plurality of data frames for a particular RFID tag (116, 126) of the plurality of RFID tags (116, 126) to determine that the summated power value for each data frame over the plurality of data frames for the particular RFID tag (116, 126) meets a target predicate wherein the target predicate defines a set of rules used in evaluating whether the summated power value for at least one data frame of the plurality of data frames for the particular RFID tag satisfies a threshold value; and
responsive to determining the summated power value for each data frame over the plurality of data frames for the particular RFID tag (116, 126) meets the target predicate, causing an action to be performed with respect to the particular RFID tag (116, 126).

6. The system of claim 5, wherein the plurality of data frames comprises a sequence of data frames occurring over a period of time.

7. The system of claim 5 or 6, wherein the action comprises generating an indication of a location of the particular RFID tag (116, 126) for display on a user interface.

8. The system of claim 5 or 6, wherein the system is a mobile device that comprises the reader (130) and the antenna (115, 126) and the mobile device travels through an area in which the plurality of RFID tags (116, 126) is located.

9. The system of claim 8, wherein the action comprises generating an indication for display on a user interface provided on a screen of the mobile device as to whether the mobile device is at least one of pointed in a direction of a location of the particular RFID tag or within a certain distance of the particular RFID tag (116, 126).

10. A computer-readable medium storing computer-executable instructions that, when executed by computing hardware, configure the computing hardware to perform operations comprising:

receiving a first data frame and a second data frame, wherein:

the first data frame comprises first read data collected from a radio frequency identification, RFID, tag (116, 126) over a first interval of time,
the first read data is collected from the RFID tag (116, 126) responding to receiving a first radio frequency, RF, signal sent from a first antenna (115, 125) in communication with a reader (130),
the first read data comprises a first plurality of received signal strength indicator, RSSI, values;
the second data frame comprises second read data collected from the RFID tag (116, 126) over a second interval of time,
the second read data is collected from the RFID tag (116, 126) responding to receiving a second RF signal sent from a second antenna (115, 125) in communication with the reader (130), and
the second read data comprises a second plurality of RSSI values;

generating a first linearized power value for each RSSI value of the first plurality of RSSI values to form a set of first linearized power values;
summating the set of first linearized power values to generate a first summated power value;
generating a second linearized power value for each RSSI value of the second plurality of RSSI values to form a set of second linearized power values; and

summating the set of second linearized power values to generate a second summated power value;

**characterized by** instructions that, when executed by the computing hardware, configure the computing hardware to perform operations comprising:

evaluating the first summated power value, along with one or more other first summated power values generated from other first read data collected for the RFID tag (116, 126) at the first antenna (115, 125), and the second summated power value, along with one or more other second summated power values generated from other second read data collected for the RFID tag (116, 126) at the second antenna (115, 125), to determine that the first summated power value, along with the one or more other first summated power values, and the second summated power value, along with the one or more other second summated power values, meet a target predicate, wherein the target predicate defines a set of rules used in evaluating whether the first summated power value, along with the one or more other first summated power values, and the second summated power value, along with the one or more other second summated power values, satisfy a threshold value; and responsive to determining the first summated power value, along with the one or more other first summated power values, and the second summated power value, along with the one or more other second summated power values, meet the target predicate, causing an action to be performed with respect to the RFID tag (116, 126).

11. The computer-readable medium of claim 10, wherein the first antenna (130) is located in a first location and the second antenna (130) is located in a second location that is different from the first location, and the action comprises updating an inventory record to indicate a movement of the RFID tag (116, 126) from the first location to the second location.

12. The computer-readable medium of claim 10, wherein the first antenna (130) is located in a first location and the second antenna (130) is located in a second location that is different from the first location, and the action comprises providing an indication on a user interface of a movement of the RFID tag (116, 126) from the first location to the second location.

13. The computer-readable medium of any of claims 10 to 12, wherein generating the first linearized power value involves normalizing each RSSI value of the first plurality of RSSI values based at least in part on a first power value of the first RF signal sent from the first antenna (130) and generating the second linearized power value involves normalizing each RSSI value of the second plurality of RSSI values based at least in part on a second power value of the second RF signal sent from the second antenna (130).

**Patentansprüche**

1. Verfahren, umfassend:
   Empfangen eines Daten-Frames durch eine Rechenhardware, wobei:

   der Daten-Frame Auslesedaten umfasst, die in einem Zeitintervall aus einem Radiofrequenz-Identifikations-(RFID-)Tag (116, 126) erfasst wurden,
   die Auslesedaten als Reaktion auf das Empfangen eines Funkfrequenz-(HF-)Signals, das von einer Antenne (115, 125) in Kommunikation mit einer Leseeinheit (130) gesendet wurde, aus dem RFID-Tag (116, 126) erfasst werden, und
   die Auslesedaten eine Mehrzahl von Werten der Anzeige empfangener Signalstärke, RSSI, umfassen;
   Erzeugen eines linearisierten Leistungswerts durch die Rechenhardware für jeden RSSI-Wert der Mehrzahl von RSSI-Werten, um einen Satz linearisierter Leistungswerte für den Daten-Frame zu bilden; und
   Summieren des Satzes linearisierter Leistungswerte durch die Rechenhardware, um einen summierten Leistungswert für den Daten-Frame zu erzeugen;
   **dadurch gekennzeichnet, dass** das Verfahren umfasst:

   Bewerten des summierten Leistungswerts für den Daten-Frame durch die Rechenhardware zusammen mit einem oder mehreren weiteren summierten Leistungswerten für einen oder mehrere weitere Daten-Frames, um festzustellen, dass der summierte Leistungswert und der eine oder die mehreren weiteren summierten Leistungswerte ein Zielprädikat erfüllen, wobei das Zielprädikat einen Satz von Regeln definiert, der bei der Bewertung verwendet wird, ob der summierte Leistungswert und der eine oder die mehreren weiteren summierten Leistungswerte einen Schwellenwert erfüllen; und
   als Reaktion auf das Feststellen, dass der summierte Leistungswert und der eine oder die mehreren weiteren summierten Leistungswerte das Zielprädikat erfüllen, Veranlassen der Durchführung einer Aktion in Bezug auf den RFID-Tag (116, 126).

2. Verfahren nach Anspruch 1, wobei die Aktion das Ändern einer Einstellung der Leseeinheit (130) in einen einzelnen Zielmodus umfasst, um eine Unterbrechung eines Auslesevorgangs des RFID-Tags (116, 126) zu initiieren.

3. Verfahren nach einem der Ansprüche 1 bis 2, wobei der eine oder die mehreren weiteren Daten-Frames ein oder mehrere vorherige Daten-Frames sind, die Auslesedaten umfassen, die zu einem früheren Zeitpunkt aus dem RFID-Tag erfasst wurden.

4. Verfahren nach einem der Ansprüche 1 bis 3, wobei das Erzeugen des linearisierten Leistungswerts für jeden RSSI-Wert der Mehrzahl von RSSI-Werten das Normalisieren des RSSI-Werts zumindest teilweise auf Grundlage eines Leistungswerts des von der Antenne gesendeten HF-Signals umfasst.

5. System, das umfasst:

ein computerlesbares Medium, auf dem Anweisungen gespeichert sind; und
eine Verarbeitungsvorrichtung, die mit dem computerlesbaren Medium kommunikativ gekoppelt ist, wobei die Verarbeitungsvorrichtung dazu konfiguriert ist, die Anweisungen auszuführen und dadurch Operationen durchzuführen, die umfassen:
Empfangen einer Mehrzahl von Daten-Frames, wobei:

jeder Daten-Frame der Mehrzahl von Daten-Frames Auslesedaten umfasst, die in einem Zeitintervall von einer Mehrzahl von Radiofrequenz-Identifikations-(RFID-)Tags (116, 126) erfasst wurden,
die Auslesedaten als Reaktion auf das Empfangen eines Funkfrequenz-(HF-)Signals, das von einer Antenne (115, 125) in Kommunikation mit einer Leseeinheit (130) gesendet wurde, aus der Mehrzahl von RFID-Tags (116, 126) erfasst werden, und
die Auslesedaten eine Mehrzahl von Werten der Anzeige empfangener Signalstärke, RSSI, umfassen;
für jeden Daten-Frame der Mehrzahl von Daten-Frames:

Erzeugen eines linearisierten Leistungswerts für jeden RSSI-Wert der Mehrzahl von RSSI-Werten, um einen Satz linearisierter Leistungswerte für den Daten-Frame zu bilden; und
für jeden RFID-Tag (116, 126) der Mehrzahl von Tags, die im Daten-Frame repräsentiert sind: Gruppieren der
im Satz linearisierter Leistungswerte für den RFID-Tag (116, 126) enthaltenen linearisierten Leistungswerte zu einer Gruppe linearisierter Leistungswerte; und Summieren der Gruppe linearisierter Leistungswerte, um einen summierten Leistungswert für den RFID-Tag (116, 126) und den Daten-Frame zu erzeugen;
**dadurch gekennzeichnet,**
**dass** die Verarbeitungsvorrichtung so konfiguriert ist, die Anweisungen auszuführen und dadurch Operationen durchzuführen, die umfassen:

Bewerten des summierten Leistungswerts für jeden Daten-Frame der Mehrzahl von Daten-Frames für einen bestimmten RFID-Tag (116, 126) der Mehrzahl von RFID-Tags (116, 126), um festzustellen, dass der summierte Leistungswert für jeden Daten-Frame über die Mehrzahl von Daten-Frames für den bestimmten RFID-Tag (116, 126) ein Zielprädikat erfüllt, wobei das Zielprädikat einen Satz von Regeln definiert, die bei der Bewertung verwendet werden, ob der summierte Leistungswert für mindestens einen Daten-Frame der Mehrzahl von Daten-Frames für den bestimmten RFID-Tag einen Schwellenwert erfüllt; und
als Reaktion auf das Feststellen, dass der summierte Leistungswert für jeden Daten-Frame über die Mehrzahl von Daten-Frames für den bestimmten RFID-Tag (116, 126) das Zielprädikat erfüllt, Veranlassen der Durchführung einer Aktion in Bezug auf den bestimmten RFID-Tag (116, 126).

6. System nach Anspruch 5, wobei die Mehrzahl von Daten-Frames eine Folge von Daten-Frames umfasst, die über einen Zeitraum hinweg auftreten.

7. System nach Anspruch 5 oder 6, wobei die Aktion das Erzeugen einer Anzeige eines Standorts des bestimmten RFID-Tags (116, 126) zur Darstellung auf einer Benutzerschnittstelle umfasst.

8. System nach Anspruch 5 oder 6, wobei das System ein mobiles Gerät ist, das die Leseeinheit (130) und die Antenne (115, 126) umfasst, und wobei sich das mobile Gerät durch einen Bereich bewegt, in dem sich die Mehrzahl von RFID-Tags (116, 126) befindet.

9. System nach Anspruch 8, wobei die Aktion das Erzeugen einer Anzeige, ob das mobile Gerät mindestens eines von in Richtung eines Standorts des bestimmten RFID-Tags ausgerichtet oder innerhalb eines jeweiligen Abstands zu dem bestimmten RFID-Tag (116, 126) ausgerichtet ist, zur Darstellung auf einer auf einem Bildschirm des mobilen Geräts bereitgestellten Benutzerschnittstelle umfasst.

10. Computerlesbares Medium, das computerausführbare Anweisungen speichert, die bei Ausführung durch Rechenhardware die Rechenhardware dazu konfigurieren, Operationen durchzuführen, die umfassen:

Empfangen eines ersten Daten-Frames und eines zweiten Daten-Frames, wobei:

der erste Daten-Frame erste Auslesedaten umfasst, die in einem ersten Zeitintervall aus einem Radiofrequenz-Identifikations-(RFID-)Tag (116, 126) erfasst wurden,
die ersten Auslesedaten als Reaktion auf das Empfangen eines ersten Funkfrequenz-(HF-)Signals, das von einer ersten Antenne (115, 125) in Kommunikation mit einer Leseeinheit (130) gesendet wurde, aus dem RFID-Tag (116, 126) erfasst werden,
die ersten Auslesedaten eine erste Mehrzahl von Werten der Anzeige empfangener Signalstärke, RSSI, umfassen;
der zweite Daten-Frame zweite Auslesedaten umfasst, die über ein zweites Zeitintervall aus dem RFID-Tag (116, 126) erfasst wurden,
die zweiten Auslesedaten als Reaktion auf das Empfangen eines zweiten RF-Signals, das von einer zweiten Antenne (115, 125) in Kommunikation mit der Leseeinheit (130) gesendet wird, aus dem RFID-Tag (116, 126) erfasst werden, und
die zweiten Auslesedaten eine zweite Mehrzahl von RSSI-Werten umfassen;
Erzeugen eines ersten linearisierten Leistungswerts für jeden RSSI-Wert der ersten Mehrzahl von RSSI-Werten, um einen Satz erster linearisierter Leistungswerte zu bilden;
Summieren des Satzes erster linearisierter Leistungswerte, um einen ersten summierten Leistungswert zu erzeugen;
Erzeugen eines zweiten linearisierten Leistungswerts für jeden RSSI-Wert der zweiten Mehrzahl von RSSI-Werten, um einen Satz zweiter linearisierter Leistungswerte zu bilden; und
Summieren des Satzes zweiter linearisierter Leistungswerte, um einen zweiten summierten Leistungswert zu erzeugen;
**gekennzeichnet durch** Anweisungen, die bei Ausführung durch die Rechenhardware die Rechenhardware dazu konfigurieren, Operationen durchzuführen, die umfassen:

Bewerten des ersten summierten Leistungswerts zusammen mit einem oder mehreren weiteren ersten summierten Leistungswerten, die aus weiteren ersten Auslesedaten erzeugt wurden, die für den RFID-Tag (116, 126) an der ersten Antenne (115, 125) erfasst wurden, sowie des zweiten summierten Leistungswerts zusammen mit einem oder mehreren weiteren zweiten summierten Leistungswerten, die aus weiteren zweiten Auslesedaten erzeugt wurden, die für den RFID-Tag (116, 126) an der zweiten Antenne (115, 125) erfasst wurden, um festzustellen, dass der erste summierte Leistungswert zusammen mit dem einen oder den mehreren weiteren ersten summierten Leistungswerten und der zweite summierte Leistungswert zusammen mit dem einen oder den mehreren weiteren zweiten summierten Leistungswerten ein Zielprädikat erfüllen, wobei das Zielprädikat einen Satz von Regeln definiert, die bei der Bewertung verwendet werden, ob der erste summierte Leistungswert zusammen mit dem einen oder den mehreren weiteren ersten summierten Leistungswerten und der zweite summierte Leistungswert zusammen mit dem einen oder den mehreren weiteren zweiten summierten Leistungswerten einen Schwellenwert erfüllen; und
als Reaktion auf das Feststellen, dass der erste summierte Leistungswert zusammen mit dem einen oder den mehreren weiteren ersten summierten Leistungswerten und der zweite summierte Leistungswert zusammen mit dem einen oder den mehreren weiteren zweiten summierten Leistungswerten das Zielprädikat erfüllen, Veranlassen der Durchführung einer Aktion in Bezug auf den RFID-Tag (116, 126).

11. Computerlesbares Medium nach Anspruch 10, wobei die erste Antenne (130) an einem ersten Ort angeordnet ist und die zweite Antenne (130) an einem zweiten Ort angeordnet ist, der sich von dem ersten Ort unterscheidet, und wobei die Aktion das Aktualisieren eines Bestandseintrags umfasst, um eine Bewegung des RFID-Tags (116, 126) von dem ersten Ort zu dem zweiten Ort anzuzeigen.

12. Computerlesbares Medium nach Anspruch 10, wobei die erste Antenne (130) an einem ersten Ort angeordnet ist und die zweite Antenne (130) an einem zweiten Ort angeordnet ist, der sich von dem ersten Ort unterscheidet, und wobei die Aktion das Bereitstellen einer Anzeige einer Bewegung des RFID-Tags (116, 126) von dem ersten Ort zu dem zweiten Ort auf einer Benutzerschnittstelle umfasst.

13. Computerlesbares Medium nach einem der Ansprüche 10 bis 12, wobei das Erzeugen des ersten linearisierten Leistungswerts das Normalisieren jedes RSSI-Werts der ersten Mehrzahl von RSSI-Werten zumindest teilweise auf der Grundlage eines ersten Leistungswerts des ersten von der ersten Antenne (130) gesendeten RF-Signals umfasst, und wobei das Erzeugen des zweiten linearisierten Leistungswerts das Normalisieren jedes RSSI-Werts der zweiten Mehrzahl von RSSI-Werten zumindest teilweise auf der Grundlage eines zweiten Leistungswerts des zweiten von der zweiten Antenne (130) gesendeten RF-Signals umfasst.

**Revendications**

1. Procédé comprenant :
la réception, par un matériel informatique, d'une trame de données, dans lequel :

la trame de données comprend des données de lecture collectées à partir d'une étiquette d'identification par radiofréquence, RFID, (116, 126) sur un intervalle de temps,
les données de lecture sont collectées à partir de l'étiquette RFID (116, 126) répondant à la réception d'un signal radiofréquence, RF, envoyé à partir d'une antenne (115, 125) en communication avec un lecteur (130), et
les données de lecture comprennent une pluralité de valeurs d'indicateur de force de signal reçu, RSSI ;
la génération, par le matériel informatique, d'une valeur de puissance linéarisée pour chaque valeur RSSI de la pluralité de valeurs RSSI pour former un ensemble de valeurs de puissance linéarisées pour la trame de données ; et
la sommation, par le matériel informatique, de l'ensemble de valeurs de puissance linéarisées pour générer une valeur de puissance sommée pour la trame de données ;
**caractérisé par** le procédé comprenant
l'évaluation, par le matériel informatique, de la valeur de puissance sommée pour la trame de données, ainsi que d'une ou plusieurs autres valeurs de puissance sommées pour une ou plusieurs autres trames de données, pour déterminer que la valeur de puissance sommée et les une ou plusieurs autres valeurs de puissance sommées respectent un prédicat cible, dans lequel le prédicat cible définit un ensemble de règles utilisées dans l'évaluation de si la valeur de puissance sommée et les une ou plusieurs autres valeurs de puissance sommées satisfont à une valeur de seuil ; et
en réponse à la détermination que la valeur de puissance sommée et les une ou plusieurs autres valeurs de puissance sommées respectent le prédicat cible, le fait de provoquer une action à réaliser par rapport à l'étiquette RFID (116, 126).

2. Procédé selon la revendication 1, dans lequel l'action comprend le changement d'un réglage du lecteur (130) vers un mode cible unique pour initier une interruption d'une lecture de l'étiquette RFID (116, 126).

3. Procédé selon l'une quelconque des revendications 1 à 2, dans lequel les une ou plusieurs autres trames de données sont une ou plusieurs trames de données précédentes comprenant des données de lecture collectées à partir de l'étiquette RFID à un moment précédent.

4. Procédé selon l'une quelconque des revendications 1 à 3, dans lequel la génération de la valeur de puissance linéarisée pour chaque valeur RSSI de la pluralité de valeurs RSSI comprend la normalisation de la valeur RSSI sur la base au moins en partie d'une valeur de puissance du signal RF envoyé à partir de l'antenne.

5. Système comprenant :

un support lisible par ordinateur stockant des instructions ; et
un dispositif de traitement couplé de manière communicative au support lisible par ordinateur, dans lequel le dispositif de traitement est configuré pour exécuter les instructions et réaliser ainsi des opérations comprenant :
la réception d'une pluralité de trames de données, dans lequel :

chaque trame de données de la pluralité de trames de données comprend des données de lecture collectées à partir d'une pluralité d'étiquettes d'identification par radiofréquence, RFID, (116, 126) sur un intervalle de temps,
les données de lecture sont collectées à partir de la pluralité d'étiquettes RFID (116, 126) répondant à la réception d'un signal radiofréquence, RF, envoyé à partir d'une antenne (115, 125) en communication avec un lecteur (130), et

les données de lecture comprennent une pluralité de valeurs d'indicateur de force de signal reçu, RSSI ;

pour chaque trame de données de la pluralité de trames de données :

la génération d'une valeur de puissance linéarisée pour chaque valeur RSSI de la pluralité de valeurs RSSI pour former un ensemble de valeurs de puissance linéarisées pour la trame de données ; et

pour chaque étiquette RFID (116, 126) dans la pluralité d'étiquettes représentées dans la trame de données : le regroupement des valeurs de puissance linéarisées trouvées dans l'ensemble de valeurs de puissance linéarisées pour l'étiquette RFID (116, 126) en un groupe de valeurs de puissance linéarisées ; et la sommation du groupe de valeurs de puissance linéarisées pour générer une valeur de puissance sommée pour l'étiquette RFID (116, 126) et la trame de données ;

**caractérisé en**

**ce que** le dispositif de traitement est configuré pour exécuter les instructions et réaliser ainsi des opérations comprenant :

l'évaluation de la valeur de puissance sommée pour chaque trame de données de la pluralité de trames de données pour une étiquette RFID particulière (116, 126) de la pluralité d'étiquettes RFID (116, 126) pour déterminer que la valeur de puissance sommée pour chaque trame de données sur la pluralité de trames de données pour l'étiquette RFID particulière (116, 126) respecte un prédicat cible, dans lequel le prédicat cible définit un ensemble de règles utilisées dans l'évaluation de si la valeur de puissance sommée pour au moins une trame de données de la pluralité de trames de données pour l'étiquette RFID particulière satisfait à une valeur de seuil ; et

en réponse à la détermination que la valeur de puissance sommée pour chaque trame de données sur la pluralité de trames de données pour l'étiquette RFID particulière (116, 126) respecte le prédicat cible, le fait de provoquer une action à réaliser par rapport à l'étiquette RFID particulière (116, 126).

**6.** Système selon la revendication 5, dans lequel la pluralité de trames de données comprend une séquence de trames de données se produisant sur une période de temps.

**7.** Système selon la revendication 5 ou 6, dans lequel l'action comprend la génération d'une indication d'un emplacement de l'étiquette RFID particulière (116, 126) pour un affichage sur une interface utilisateur.

**8.** Système selon la revendication 5 ou 6, dans lequel le système est un dispositif mobile qui comprend le lecteur (130) et l'antenne (115, 126) et le dispositif mobile se déplace à travers une zone dans laquelle la pluralité d'étiquettes RFID (116, 126) est située.

**9.** Système selon la revendication 8, dans lequel l'action comprend la génération d'une indication pour un affichage sur une interface utilisateur fournie sur un écran du dispositif mobile quant à si le dispositif mobile est au moins l'un parmi pointé dans une direction d'un emplacement de l'étiquette RFID particulière ou à l'intérieur d'une certaine distance de l'étiquette RFID particulière (116, 126).

**10.** Support lisible par ordinateur stockant des instructions exécutables par ordinateur qui, lorsqu'elles sont exécutées par un matériel informatique, configurent le matériel informatique pour réaliser des opérations comprenant :

la réception d'une première trame de données et d'une seconde trame de données, dans lequel :

la première trame de données comprend des premières données de lecture collectées à partir d'une étiquette d'identification par radiofréquence, RFID, (116, 126) sur un premier intervalle de temps,

les premières données de lecture sont collectées à partir de l'étiquette RFID (116, 126) répondant à la réception d'un premier signal radiofréquence, RF, envoyé à partir d'une première antenne (115, 125) en communication avec un lecteur (130),

les premières données de lecture comprennent une première pluralité de valeurs d'indicateur de force de signal reçu, RSSI ;

la seconde trame de données comprend des secondes données de lecture collectées à partir de l'étiquette RFID (116, 126) sur un second intervalle de temps,

les secondes données de lecture sont collectées à partir de l'étiquette RFID (116, 126) répondant à la réception d'un second signal RF envoyé à partir d'une seconde antenne (115, 125) en communication avec le lecteur (130), et les secondes données de lecture comprennent une seconde pluralité de valeurs RSSI ;

la génération d'une première valeur de puissance linéarisée pour chaque valeur RSSI de la première pluralité de valeurs RSSI pour former un ensemble de premières valeurs de puissance linéarisées ;

la sommation de l'ensemble de premières valeurs de puissance linéarisées pour générer une première valeur de puissance sommée ;

la génération d'une seconde valeur de puissance linéarisée pour chaque valeur RSSI de la seconde pluralité de valeurs RSSI pour former un ensemble de secondes valeurs de puissance linéarisées ; et

la sommation de l'ensemble de secondes valeurs de puissance linéarisées pour générer une seconde valeur de puissance sommée ;

**caractérisé par** des instructions qui, lorsqu'elles sont exécutées par le matériel informatique, configurent le matériel informatique pour réaliser des opérations comprenant :

l'évaluation de la première valeur de puissance sommée, ainsi que d'une ou plusieurs autres premières valeurs de puissance sommées générées à partir d'autres premières données de lecture collectées pour l'étiquette RFID (116, 126) au niveau de la première antenne (115, 125), et de la seconde valeur de puissance sommée, ainsi que d'une ou plusieurs autres secondes valeurs de puissance sommées générées à partir d'autres secondes données de lecture collectées pour l'étiquette RFID (116, 126) au niveau de la seconde antenne (115, 125), pour déterminer que la première valeur de puissance sommée, ainsi que les une ou plusieurs autres premières valeurs de puissance sommées, et la seconde valeur de puissance sommée, ainsi que les une ou plusieurs autres secondes valeurs de puissance sommées, respectent un prédicat cible, dans lequel le prédicat cible définit un ensemble de règles utilisées dans l'évaluation de si la première valeur de puissance sommée, ainsi que les une ou plusieurs autres premières valeurs de puissance sommées, et la seconde valeur de puissance sommée, ainsi que les une ou plusieurs autres secondes valeurs de puissance sommées, satisfont à une valeur de seuil ; et

en réponse à la détermination que la première valeur de puissance sommée, ainsi que les une ou plusieurs autres premières valeurs de puissance sommées, et la seconde valeur de puissance sommée, ainsi que les une ou plusieurs autres secondes valeurs de puissance sommées, respectent le prédicat cible, le fait de provoquer une action à réaliser par rapport à l'étiquette RFID (116, 126).

11. Support lisible par ordinateur selon la revendication 10, dans lequel la première antenne (130) est située dans un premier emplacement et la seconde antenne (130) est située dans un second emplacement qui est différent du premier emplacement, et l'action comprend la mise à jour d'un enregistrement d'inventaire pour indiquer un mouvement de l'étiquette RFID (116, 126) du premier emplacement vers le second emplacement.

12. Support lisible par ordinateur selon la revendication 10, dans lequel la première antenne (130) est située dans un premier emplacement et la seconde antenne (130) est située dans un second emplacement qui est différent du premier emplacement, et l'action comprend la fourniture d'une indication sur une interface utilisateur d'un mouvement de l'étiquette RFID (116, 126) du premier emplacement vers le second emplacement.

13. Support lisible par ordinateur selon l'une quelconque des revendications 10 à 12, dans lequel la génération de la première valeur de puissance linéarisée implique la normalisation de chaque valeur RSSI de la première pluralité de valeurs RSSI sur la base au moins en partie d'une première valeur de puissance du premier signal RF envoyé à partir de la première antenne (130) et la génération de la seconde valeur de puissance linéarisée implique la normalisation de chaque valeur RSSI de la seconde pluralité de valeurs RSSI sur la base au moins en partie d'une seconde valeur de puissance du second signal RF envoyé à partir de la seconde antenne (130).

FIG. 1

FIG. 2

FIG. 3A

FIG. 3B

FIG. 3C

410

Linearize
Power Values

415

Populate Frame
Disctionary

420

Group
by Tag

425

Group by
Antenna

430

Summate
Values

FIG. 4

Evalute Target
Predicate(s)

510

Target
Match?

515

No

Yes

Exit

520

Provide Data
to Dependent(s)

525

FIG. 5

FIG. 6

FIG. 7

**REFERENCES CITED IN THE DESCRIPTION**

**Patent documents cited in the description**

- US 2022358298 A1
- US 2017004334 A1
- US 2022239335 A1